# EUROPÄISCHE PATENTSCHRIFT

(11) **EP 2 813 697 B1**
(45) Veröffentlichungstag und Bekanntmachung des Hinweises auf die Patenterteilung: **17.08.2016**
(21) Anmeldenummer: 14169149.3
(22) Anmeldetag: 20.05.2014
(51) Int. Cl.: F02M 35/10, F01N 13/08, F16L 43/00, F02B 33/44, F15D 1/04

(54) **Rohrbogen und Frischgasstrang für eine Brennkraftmaschine**
Elbow pipe and fresh gas line for an internal combustion engine
Coude de tube et faisceau de gaz d'affinage pour un moteur à combustion interne

(30) Priorität: 14.06.2013 DE 102013010005
(43) Veröffentlichungstag der Anmeldung: 17.12.2014
(73) Patentinhaber: Volkswagen Aktiengesellschaft, 38440 Wolfsburg (DE); Skoda Auto A.S., 293 60 Mladá Boleslav (CZ)
(72) Erfinder: Schmidt, Arnd, 38518 Gifhorn (DE); Uzlik, Vaclav, 14800 Prag (CZ); Lempera, Ales, 59101 Zdar nad Sazavou (CZ)

(56) Entgegenhaltungen:
- DE-C- 573 890
- GB-A- 2 371 334
- US-A- 2 056 782
- US-B1- 6 179 342

## Beschreibung

Die Erfindung betrifft einen Rohrbogen, insbesondere einen zur Führung einer Gasströmung vorgesehen Rohrbogen, sowie einen Frischgasstrang für eine Brennkraftmaschine, die insbesondere zum Antrieb eines Kraftfahrzeugs vorgesehen sein kann.

Rohrleitungen, die gebogene Abschnitte (Rohrbogen) aufweisen und zur Führung von Gasströmungen vorgesehen sind, werden in einer Vielzahl von Anwendungen eingesetzt. In Kraftfahrzeugen kommen solche Rohrleitungen beispielsweise im Frischgasstrang sowie im Abgasstrang von Brennkraftmaschinen zum Einsatz.

Relevant bei der Auslegung eines Frisch- oder Abgasstrangs ist der Druckabfall des Frisch- oder Abgases bei der Durchströmung. Ein großer Druckabfall im Abgasstrang ist gleichbedeutend mit einem hohen Gegendruck für den Verbrennungsmotor, an den der Abgasstrang angeschlossen ist. Ein erhöhter Gegendruck beeinflusst das Betriebsverhalten eines Verbrennungsmotors tendenziell negativ und kann insbesondere zu einer Erhöhung des spezifischen Kraftstoffverbrauchs führen. Ein großer Druckabfall im Frischgasstrang, insbesondere in der Ladeluftstrecke des Frischgasstrangs einer aufgeladenen Brennkraftmaschine, vermindert die Wirkung der Aufladung und somit die Füllung der Brennräume des Verbrennungsmotors.

Der in dem Frisch- und Abgasstrang einer Brennkraftmaschine erzeugte Druckabfall wird primär von den darin integrierten Komponenten hervorgerufen. Im Abgasstrang sind dies insbesondere die Turbine eines Abgasturbolader sowie die Abgasnachbehandlungseinrichtungen, wie z.B. Katalysator und Partikelfilter. In der Ladeluftstrecke des Frischgasstrang können dies insbesondere der Ladeluftkühler und die Drosselklappe sein. Aber auch die die Komponenten verbindenden Rohrleitungen haben einen Anteil daran, wobei gebogene Abschnitte durch höhere Drosselverluste im Vergleich zu geraden Abschnitten gekennzeichnet sind. Die Drosselverluste werden insbesondere durch Verwirbelungen der Gasströmung verursacht.

Aus der WO 00/32923 A1 ist bekannt, den Querschnitt eines Rohrkrümmers, der einen Teil des Frischgasstrangs einer Brennkraftmaschine darstellt, innen, d.h. auf der dem Krümmungsmittelpunkt zugewandten Seite, abgeflacht auszubilden. Die sich dadurch ergebende Querschnittsform wird in der WO 00/32923 A1 mit derjenigen eines Brotlaibs verglichen, wobei die Flachseite dem Krümmungsmittelpunkt zugewandt ist. Im Vergleich zu einem Kreisquerschnitt mit vergleichbarer Fläche soll durch die abgeflachte Querschnittsform eine turbulente Strömungsausbildung in der Innenkontur des Rohrbogens verhindert und somit die Strömungsverluste vermindert werden.

In der US 2 056 782 A wird hingegen ein Rohrbogen ähnlich dem soeben beschriebenen Rohrkrümmer offenbart, bei welchem die Flachseite dem Krümmungsmittelpunkt jedoch abgewandt ist. Dadurch sollen Wirbelverluste der Strömung reduziert werden.

Aus der DE 10 2008 019 432 A1 ist ein Rohrbogen bekannt, der dadurch strömungsoptimiert ausgebildet sein soll, dass sich die Rohrbogenquerschnittsfläche ausgehend von einem Einlass bis zu einem Auslass des Rohrbogens zunächst vergrößert und dann wieder verkleinert.

Ausgehend von diesem Stand der Technik lag der Erfindung die Aufgabe zugrunde, einen Rohrbogen anzugeben, der sich durch möglichst geringe Drosselverluste der darin geführten Gasströmung auszeichnet.

Diese Aufgabe wird durch einen Rohrbogen gemäß dem unabhängigen Patentanspruch 1 gelöst. Ein mindestens einen solchen Rohrbogen aufweisender Frischgasstrang für eine Brennkraftmaschine ist Gegenstand des unabhängigen Patentanspruchs 8. Vorteilhafte Ausgestaltungen des erfindungsgemäßen Rohrbogens und des erfindungsgemäßen Frischgasstrangs sind Gegenstand der jeweiligen abhängigen Patentansprüche und ergeben sich aus der nachfolgenden Beschreibung der Erfindung.

Der Erfindung liegt der Gedanke zugrunde, die Drosselverluste in einem Rohrbogen dadurch zu vermindern, dass die Querschnittsfläche im Bereich des Innenradius kleiner ausgebildet ist als die Querschnittsfläche im Bereich des Außenradius. Dadurch soll die Gasströmung im Bereich des Innenradius gegenüber derjenigen im Bereich des Außenradius beschleunigt werden, wodurch ein Drosselverluste erzeugender Strömungsabriss vermieden werden kann.

Ein gattungsgemäßer Rohrbogen weist einen Anfangsquerschnitt, einen Endquerschnitt und eine Rohrlängsachse auf. Die Rohrlängsachse verläuft durch den Flächenschwerpunkt aller Querschnitte des Rohrbogens. Eine Krümmungsschnittfläche des Rohrbogens ist dadurch gekennzeichnet, dass sie die Verbindungsgeraden zwischen jedem Punkt auf der Rohrlängsachse und dem dazugehörigen Krümmungsmittelpunkt umfasst, soweit diese innerhalb des Rohrbogens verlaufen. Eine Unterteilungslängsachse des Rohrbogens verläuft innerhalb der Krümmungsschnittfläche, und zwar mittig, d.h. mit identischem Abstand zwischen der Rohrwandung, innerhalb jedes Querschnitts. Eine Unterteilungsschnittfläche ist dadurch gekennzeichnet, dass sie entlang der Unterteilungslängsachse verläuft und in jedem Rohrbogenquerschnitt senkrecht zur Krümmungsschnittfläche ausgerichtet ist. Die Unterteilungsschnittfläche unterteilt somit jeden Querschnitt des Rohrbogens in einen dem dazugehörigen Krümmungsmittelpunkt näher liegenden Innenteil und einen dem dazugehörigen Krümmungsmittelpunkt entfernter liegenden Außenteil.

Ein solcher gattungsgemäßer Rohrbogen ist derart ausgebildet, dass in zumindest einem zwischen dem Anfangsquerschnitt und dem Endquerschnitt angeordneten Zwischenabschnitt, in dem die Unterteilungslängsachse gekrümmt verläuft, die Querschnittsfläche des Innenteils kleiner als die entsprechende Querschnittfläche des Außenteils jedes Querschnitts ist.

Der Begriff "Querschnitt" bezieht sich auf den freien Strömungsquerschnitt innerhalb des Rohrbogens. Sofern der Rohrbogen eine konstante Wandstärke aufweist, kann damit aber auch der jeweilige Gesamt- bzw. Außenquerschnitt bezeichnet werden.

Erfindungsgemäß ist vorgesehen, dass zumindest ein und vorzugsweise alle Querschnitte in dem Zwischenabschnitt im Wesentlichen eine T-Form oder die Form des Fruchtkörpers eines Hutpilzes (pilzförmig) aufweisen, wobei der Mittelschenkel der T-Form den Innenteil und die Querschenkel der T-Form den Außenteil der Querschnittsfläche ausbilden. Die Mittelachse des Mittelschenkels kann demnach koaxial zur Verbindungsgeraden zwischen dem zu dem Querschnitt gehörigen Punkt auf der Rohrlängsachse und dem dazugehörigen Krümmungsmittelpunkt verlaufen. Eine solche Querschnittsform hat sich als besonders wirkungsvoll bei der Reduzierung Drosselverluste gezeigt.

Vorzugsweise kann vorgesehen sein, dass zumindest ein und vorzugsweise alle Querschnitte in dem Zwischenabschnitt eine Form mit zwei konkaven und zwei konvexen Abschnitten aufweisen.

Weiterhin bevorzugt kann vorgesehen sein, dass der Anfangsquerschnitt und/oder der Endquerschnitt kreisförmig ausgebildet ist. Hierbei handelt es sich um die bevorzugte Querschnittsform für einen geraden Abschnitt einer einen erfindungsgemäßen Rohrbogen umfassenden Rohrleitung. Ein durchgehend kreisförmiger Querschnitt bei geraden Abschnitten der Rohrleitung zeichnet sich durch eine einfache und somit kostengünstige Herstellbarkeit der Rohrabschnitte bei gleichzeitig geringen Drosselverlusten aus.

Vorzugsweise kann vorgesehen sein, dass in den Querschnitten des Zwischenabschnitts die Differenz zwischen der Querschnittsfläche des Außenteils und des Innenteils umso größer ist, je kleiner der Krümmungsradius (d.h. der Abstand zu dem dazugehörigen Krümmungsmittelpunkt) der Unterteilungs- bzw. Rohrlängsachse in dem dazugehörigen Punkt ist.

Zudem kann vorteilhafterweise vorgesehen sein, dass der oder die Querschnitte in dem Zwischenabschnitt kontinuierlich in den Anfangs- und Endquerschnitt übergehen. Demnach kann ausgehend von einem Querschnitt des Zwischenabschnitts, in dem die Differenz zwischen der Querschnittsfläche des Außenteils und des Innenteils am größten ist, diese Differenz in Richtung des Anfangsquerschnitts und/oder des Endquerschnitts abnehmen. Diese die Abnahme der Differenz ist vorzugsweise kontinuierlich und insbesondere konstant.

Weiterhin bevorzugt kann vorgesehen sein, dass die Krümmungsschnittfläche den Rohrbogen in zwei symmetrische Seitenteile unterteilt.

Und schließlich kann bei einem erfindungsgemäßen Rohrbogen vorteilhafterweise vorgesehen sein, dass zumindest eine und vorzugsweise alle Querschnittsflächen in dem Zwischenabschnitt kleiner sind als die Querschnittsfläche(n) des Anfangsquerschnitts und/oder des Endquerschnitts. Demnach kann der Rohrbogen gegenüber sich an diesen anschließenden geraden Rohrabschnitten (deren Querschnittfläche(n) möglichst groß gewählt sein sollten, um Drosselverluste zu minimieren) eine Einschnürung ausbilden, die grundsätzlich zu einer Beschleunigung des Gasströmung in dem Rohrbogen führen kann. Dadurch kann der Effekt, dass sich die Strömung an der Rohrwand des Außenteils anlegt, was mit einem Ablösen von der Rohrwand des Innenteils und damit mit Verwirbelungen verbunden sein würde, vermindert werden.

Ein erfindungsgemäßer Rohrbogen kann insbesondere zur Verbesserung der Strömung des Frischgases in einem Frischgasstrang einer Brennkraftmaschine, die vorzugsweise zum Antrieb eines Kraftfahrzeugs vorgesehen sein kann, eingesetzt werden.

Besonders bevorzugt kann mindestens ein erfindungsgemäßer Rohrbogen stromab eines Verdichters, beispielsweise eines Abgasturboladers, und somit in einer Ladeluftstrecke des Frischgasstrangs eingesetzt werden. Dadurch kann erreicht werden, dass ein Druckabfall des Frischgases nach der Aufladung gering gehalten wird, so dass sich die Aufladung möglichst optimal auswirken kann.

Aus Gründen des regelmäßig nur beschränkt verfügbaren Bauraums kann zudem vorgesehen sein, dass mindestens ein erfindungsgemäßer Rohrbogen stromauf eines Ladeluftkühler angeordnet ist. Die häufig ausgeprägte Krümmung des Frischgasstrangs zwischen dem Verdichter und dem Ladeluftkühler kann durch die erfindungsgemäße Ausgestaltung des oder der Rohrbögen entschärft werden.

Die Erfindung wird nachfolgend anhand von in den Zeichnungen dargestellten Ausführungsbeispielen näher erläutert. In den Zeichnungen zeigt:
- Fig. 1:: eine Ausführungsform eines erfindungsgemäßen Rohrbogens in einer perspektivischen Darstellung;
- Fig. 2:: den Anfangs- und Endquerschnitt des Rohrbogens gemäß Fig. 1;
- Fig. 3:: einen Querschnitt durch den Rohrbogen gemäß Fig. 1 in seinem gekrümmt verlaufenden Zwischenabschnitt;
- Fig. 4:: einen Querschnitt durch einen erfindungsgemäßen Rohrbogen mit alternativer Querschnittsform in seinem gekrümmt verlaufenden Zwischenabschnitt; und
- Fig. 5:: einen Teil einer Ladeluftstrecke eines Frischgasstrangs für eine Brennkraftmaschine mit mehreren erfindungsgemäßen Rohrbögen.

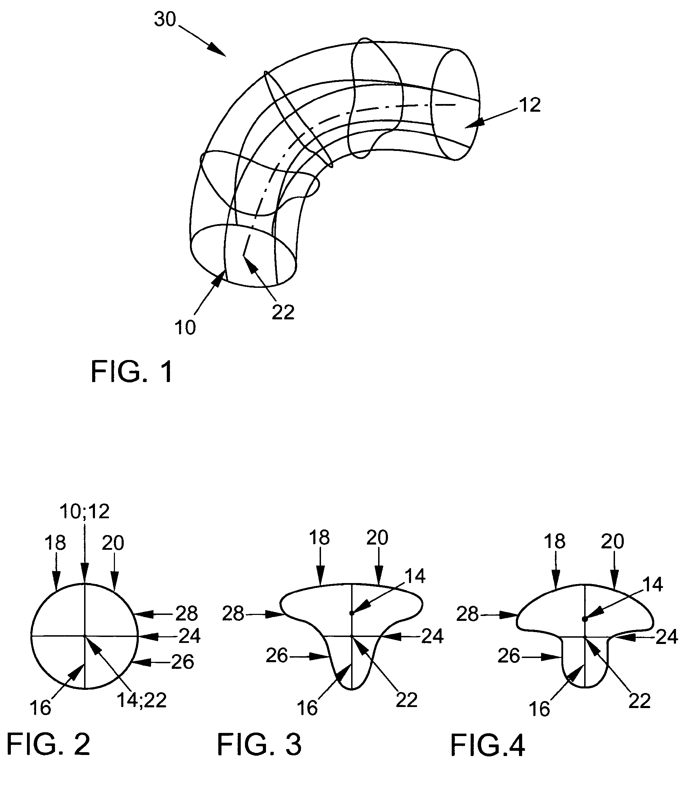

Die Fig. 1 und 2 zeigen eine Ausführungsform eines erfindungsgemäßen Rohrbogens 30. Hierbei kann es sich um einen Rohrbogen 30 handeln, der in einen Frischgasstrang oder einen Abgasstrang eines Kraftfahrzeugs integriert ist. Der Rohrbogen 30 weist endseitig einen Anfangsquerschnitt 10 und einen Endquerschnitt 12 auf. Beide sind kreisförmig ausgeführt (vgl. Fig. 2). Im Bereich des Anfangsquerschnitts 10 und des Endquerschnitts 12 ist vorgesehen, den Rohrbogen 30 jeweils an einen (nicht dargestellten) Rohrabschnitt anzuschließen, der ebenso einen kreisförmigen Querschnitt sowie einen geraden Verlauf aufweist.

Erfindungsgemäß gehen der kreisförmige Anfangsquerschnitt 10 und der kreisförmige Endquerschnitt 12 in Richtung eines zwischen diesen gelegenen Zwischenabschnitts, in dem die Rohrlängsachse 14 des Rohrbogens 30 gekrümmt verläuft, in T-förmige Querschnitte über. Die Rohrlängsachse 14 ist dadurch definiert, dass diese durch die Flächenschwerpunkte aller Querschnitte des Rohrbogens 30 verläuft.

Die Rohrlängsachse 14 verläuft zudem innerhalb einer Krümmungsschnittfläche 16, die den Rohrbogen 30 in zwei symmetrische Seitenteile 18, 20 unterteilt. Dabei ist die Krümmungsschnittfläche 16 dadurch definiert, dass in dieser die Verbindungsgeraden zwischen jedem Punkt auf der Rohrlängsachse 14 und dem dazugehörigen Krümmungsmittelpunkt verläuft. Der Krümmungsmittelpunkt ist der Mittelpunkt des Krümmungskreises, d.h. desjenigen Kreises, der die Krümmung in dem jeweiligen Punkt am besten annähert.

Mittig, d.h. mit identischem Abstand zu der Rohrwand des Rohrbogens 30, verläuft innerhalb der Krümmungsschnittfläche 16 die Unterteilungslängsachse 22. Diese definiert den längsaxialen Verlauf einer Unterteilungsschnittfläche 24, die ansonsten noch dadurch definiert ist, dass diese in jedem Querschnitt des Rohrbogens 30 senkrecht zu der Krümmungsschnittfläche 16 verläuft.

Die Unterteilungsschnittfläche 24 unterteilt den Rohrbogen 30, in einen Innenteil 26 und einen Außenteil 28, wobei der Krümmungsradius der Rohrwand des Innenteils 26 im Vergleich zu dem Krümmungsradius der Rohrwand des Außenteils 28 kleiner ist.

Durch die T-Form der Querschnitte des Rohrbogens 30 in dem Zwischenabschnitt ergibt sich jeweils eine kleinere Querschnittsfläche des Innenteils 26 (im Wesentlichen ausgebildet von dem Mittelschenkel der T-Form) im Vergleich zu der dazugehörigen (d.h. in derselben Querschnittebene liegenden) Querschnittfläche des Außenteils 28 (im Wesentlichen ausgebildet von den Querschenkeln der T-Form).

Die kleinere Querschnittsfläche des Innenteils 26 im Zwischenabschnitt sorgt für eine Beschleunigung der Gasströmung im Innenteil 26 im Vergleich zu der Gasströmung im Außenteil 28. Dadurch kann ein Drosselverluste erzeugender Strömungsabriss im Bereich des Innenteils vermieden oder zumindest reduziert werden.

Die Fig. 3 und 4 zeigen Variationen der als grundsätzlich T-förmig bezeichneten Querschnittsform, die ein erfindungsgemäßer Rohrbogen 30 in seinem Zwischenabschnitt aufweisen kann. Dabei ist der pilzförmige Querschnitt gemäß der Fig. 3 durch einen stärker gekrümmten äußeren Rohrwandabschnitt sowie durch kleinere Radien im Übergang von den Querschenkeln zu dem Mittelschenkel im Vergleich zu der Querschnittsform gemäß der Fig. 4 gekennzeichnet.

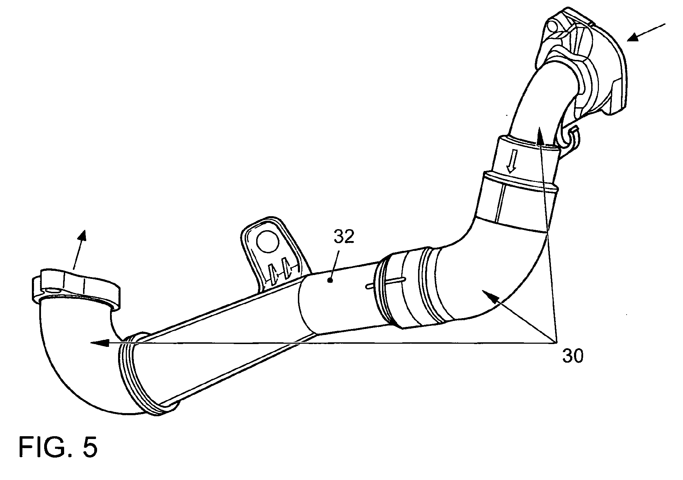

Die Fig. 5 zeigt einen Abschnitt einer Ladeluftstrecke eines Frischgasstrangs einer Brennkraftmaschine. Hierbei handelt es sich um denjenigen Abschnitt der Ladeluftstrecke, der zwischen einem Verdichter eines Abgasturboladers (nicht dargestellt) und einem Ladeluftkühler (nicht dargestellt) angeordnet ist. Dabei ist der Verdichter stromauf und der Ladeluftkühler stromab des dargestellten Abschnitts angeordnet.

In dem dargestellten Abschnitt der Ladeluftstrecke sind insgesamt drei Rohrbögen 30 angeordnet, die in ihrem Inneren jeweils eine erfindungsgemäße Ausgestaltung des freien Strömungsquerschnitts aufweisen. Zwischen zwei der drei erfindungsgemäßen Rohrbögen 30 ist ein Schalldämpfer 32 der Ladeluftstrecke angeordnet.

## Patentansprüche

1. Rohrbogen (30) mit einem Anfangsquerschnitt (10), einem Endquerschnitt (12) und einer Rohrlängsachse (14), wobei
- die Rohrlängsachse (14) durch den Flächenschwerpunkt aller Querschnitte des Rohrbogens (30) verläuft,
- eine Krümmungsschnittfläche (16) des Rohrbogens (30) die Verbindungsgeraden zwischen jedem Punkt auf der Rohrlängsachse (14) und dem dazugehörigen Krümmungsmittelpunkt umfasst,
- eine Unterteilungslängsachse (22) des Rohrbogens (30) mittig entlang der Krümmungslängsschnitttläche (16) verläuft,
- eine Unterteilungsschnittfläche (24) entlang der Unterteilungslängsachse (22) verläuft und in jedem Rohrbogenquerschnitt senkrecht zur Krümmungsschnittfläche (16) ausgerichtet ist, wobei die Unterteilungsschnittfläche (24) den Rohrbogen (30) in einen Außenteil (28) und einen Innenteil (26) unterteilt,
- in einem zwischen dem Anfangsquerschnitt (10) und dem Endquerschnitt (12) angeordneten Zwischenabschnitt, in dem die Rohrlängsachse (14) gekrümmt verläuft, die Querschnittsfläche des Innenteils (26) kleiner als die Querschnittfläche des Außenteils (28) jedes Querschnitts ist,
**dadurch gekennzeichnet, dass** ein Querschnitt in dem Zwischenabschnitt eine T-Form aufweist, wobei der Mittelschenkel den Innenteil (26) und die Querschenkel den Außenteil (28) der Querschnittsfläche ausbilden.

2. Rohrbogen (30) gemäß Anspruch 1, **dadurch gekennzeichnet, dass** der Anfangsquerschnitt (10) und/oder der Endquerschnitt (12) kreisförmig ist.

3. Rohrbogen (30) gemäß Anspruch 1 oder 2, **dadurch gekennzeichnet, dass** in den Querschnitten des Zwischenabschnitts die Differenz zwischen der Querschnittsfläche des Außenteils (28) und des Innenteils (26) umso größer ist, je kleiner der Krümmungsradius der Rohrlängsachse (14) ist.

4. Rohrbogen (30) gemäß einem der vorhergehenden Ansprüche, **dadurch gekennzeichnet, dass** ausgehend von einem Querschnitt des Zwischenabschnitts, in dem die Differenz zwischen der Querschnittsfläche des Außenteils (28) und des Innenteils (26) am größten ist, diese Differenz in Richtung des Anfangsquerschnitts (10) und/oder des Endquerschnitts (12) abnimmt.

5. Rohrbogen (30) gemäß Anspruch 4, **dadurch gekennzeichnet, dass** die Abnahme der Differenz kontinuierlich und/oder konstant ist.

6. Rohrbogen (30) gemäß einem der vorhergehenden Ansprüche, **dadurch gekennzeichnet, dass** die Krümmungsschnittfläche (16) den Rohrbogen (30) in zwei symmetrische Seitenteile (18, 20) unterteilt.

7. Rohrbogen (30) gemäß einem der vorhergehenden Ansprüche, **dadurch gekennzeichnet, dass** die Querschnittsflächen in dem Zwischenabschnitt kleiner sind als die Querschnittsfläche des Anfangsquerschnitts (10) und/oder des Endquerschnitts (12).

8. Frischgasstrang für eine Brennkraftmaschine mit mindestens einem Rohrbogen (30) gemäß einem der vorhergehenden Ansprüche.

9. Frischgasstrang gemäß Anspruch 8, **dadurch gekennzeichnet, dass** der Rohrbogen (30) zwischen einem Verdichter und einem Ladeluftkühler angeordnet ist.

## Claims

1. Elbow pipe (30) having a starting cross section (10), having an end cross section (12) and having a pipe longitudinal axis (14), wherein
- the pipe longitudinal axis (14) runs through the centre of area of all cross sections of the elbow pipe (30),
- a curvature surface of intersection (16) of the elbow pipe (30) encompasses the straight connecting lines between every point on the pipe longitudinal axis (14) and the associated curvature central point,
- a dividing longitudinal axis (22) of the elbow pipe (30) runs centrally along the curvature longitudinal surface of intersection (16),
- a dividing surface of intersection (24) runs along the dividing longitudinal axis (22) and, in every elbow pipe cross section, is oriented perpendicular to the curvature surface of intersection (16), wherein the dividing surface of intersection (24) divides the elbow pipe (30) into an outer part (28) and an inner part (26),
- in an intermediate portion which is arranged between the starting cross section (10) and the end cross section (12) and in which the pipe longitudinal axis (14) runs in curved fashion, the cross-sectional area of the inner part (26) is smaller than the cross-sectional area of the outer part (28) of every cross section,
**characterized in that** a cross section in the intermediate portion has a T-shape, wherein the central limb forms the inner part (26) and the transverse limbs form the outer part (28) of the cross-sectional area.

2. Elbow pipe (30) according to Claim 1, **characterized in that** the starting cross section (10) and/or the end cross section (12) are/is circular.

3. Elbow pipe (30) according to Claim 1 or 2, **characterized in that**, in the cross sections of the intermediate portion, the difference between the cross-sectional area of the outer part (28) and that of the inner part (26) is greater the smaller the radius of curvature of the pipe longitudinal axis (14).

4. Elbow pipe (30) according to one of the preceding claims, **characterized in that**, proceeding from a cross section of the intermediate portion in which the difference between the cross-sectional area of the outer part (28) and that of the inner part (26) is at its greatest, said difference decreases in the direction of the starting cross section (10) and/or of the end cross section (12).

5. Elbow pipe (30) according to Claim 4, **characterized in that** the decrease of the difference is continuous and/or constant.

6. Elbow pipe (30) according to one of the preceding claims, **characterized in that** the curvature surface of intersection (16) divides the elbow pipe (30) into two symmetrical side parts (18, 20).

7. Elbow pipe (30) according to one of the preceding claims, **characterized in that** the cross-sectional areas in the intermediate portion are smaller than the cross-sectional area of the starting cross section (10) and/or of the end cross section (12).

8. Fresh-gas tract for an internal combustion engine, having at least one elbow pipe (30) according to one of the preceding claims.

9. Fresh-gas tract according to Claim 8, **characterized in that** the elbow pipe (30) is arranged between a compressor and a charge-air cooler.

## Revendications

1. Coude de tube (30) comprenant une section transversale de début (10), une section transversale d'extrémité (12) et un axe longitudinal de tube (14),
- l'axe longitudinal de tube (14) s'étendant à travers le centre de gravité de surface de toutes les sections transversales du coude de tube (30),
- une section de courbure (16) du coude de tube (30) comprenant les droites de liaison entre chaque point sur l'axe longitudinal du tube (14) et le centre de courbure associé,
- un axe longitudinal de division (22) du coude de tube (30) s'étendant centralement le long de la section longitudinale de courbure (16),
- une section de division (24) s'étendant le long de l'axe longitudinal de division (22) et étant orientée perpendiculairement à la section de courbure (16) dans chaque section transversale de coude de tube, la section de division (24) divisant le coude de tube (30) en une partie extérieure (28) et une partie intérieure (26),
- dans une portion intermédiaire disposée entre la section transversale de début (10) et la section transversale d'extrémité (12), dans laquelle s'étend sous forme courbe l'axe longitudinal de tube (14), la surface en section transversale de la partie intérieure (26) est inférieure à la surface en section transversale de la partie extérieure (28) de chaque section transversale,
**caractérisé en ce qu'**une section transversale dans la portion intermédiaire présente une forme en T, la branche centrale constituant la partie intérieure (26) et la branche transversale constituant la partie extérieure (28) de la surface en section transversale.

2. Coude de tube (30) selon la revendication 1, **caractérisé en ce que** la section transversale de début (10) et/ou la section transversale d'extrémité (12) sont circulaires.

3. Coude de tube (30) selon la revendication 1 ou 2, **caractérisé en ce que** dans les sections transversales de la portion intermédiaire, la différence entre les surfaces en section transversale de la partie extérieure (28) et de la partie intérieure (26) est d'autant plus grande que le rayon de courbure de l'axe longitudinal du tube (14) est petit.

4. Coude de tube (30) selon l'une quelconque des revendications précédentes, **caractérisé en ce que** partant d'une section transversale de la portion intermédiaire dans laquelle la différence entre la surface en section transversale de la partie extérieure (28) et de la partie intérieure (26) est maximale, cette différence diminue dans la direction de la section transversale de début (10) et/ou de la section transversale d'extrémité (12).

5. Coude de tube (30) selon la revendication 4, **caractérisé en ce que** la diminution de la différence est continue et/ou constante.

6. Coude de tube (30) selon l'une quelconque des revendications précédentes, **caractérisé en ce que** la section de courbure (16) divise le coude de tube (30) en deux parties latérales symétriques (18, 20).

7. Coude de tube (30) selon l'une quelconque des revendications précédentes, **caractérisé en ce que** les surfaces en section transversale dans la portion intermédiaire sont inférieures à la surface en section transversale de la section transversale de début (10) et/ou de la section transversale d'extrémité (12).

8. Faisceau de gaz frais pour un moteur à combustion interne comprenant au moins un coude de tube (30) selon l'une quelconque des revendications précédentes.

9. Faisceau de gaz frais selon la revendication 8, **caractérisé en ce que** le coude de tube (30) est disposé entre un compresseur et un refroidisseur d'air de suralimentation.
